# DEMANDE DE BREVET EUROPEEN

(11) **EP 1 333 697 A1**
(43) Date de publication de la demande: **06.08.2003**
(21) Numéro de dépôt: 03290135.7
(22) Date de dépôt: 21.01.2003
(51) Int. Cl.: H04Q 7/36

(54) **Système cellulaire de radiocommunications mobiles**

(30) Priorité: 21.01.2002 FR 0200698
(71) Demandeur: Evolium S.A.S., 75008 Paris (FR)
(72) Inventeur: Baudet, Serge, 75014 Paris (FR)
(74) Mandataire: El Manouni, Josiane

(57) **Abrégé**

Système cellulaire de radiocommunications mobiles, comportant plusieurs réseaux dits réseaux distincts (X, Y) et un réseau dit réseau commun (C) tel que dans au moins une partie des zones géographiques qu'il couvre différents groupes d'au moins une cellule coexistent, chacun de ces groupes de cellules étant associé à un des réseaux distincts et fournissant une extension de la couverture radio de ce réseau distinct.

## Description

La présente invention concerne d'une manière générale les systèmes de radiocommunications mobiles.

La présente invention est applicable à tout système de radiocommunications mobiles, tels que notamment les systèmes dits de deuxième génération, par exemple de type GSM (« Global System for Mobile communications »), ou les systèmes dits de troisième génération, par exemple de type UMTS (« Universal Mobile Telecommunications System »). D'une manière générale, ces systèmes font l'objet de normalisation ; pour plus d'informations on pourra se référer aux normes correspondantes, publiées par les organismes de normalisation correspondants.

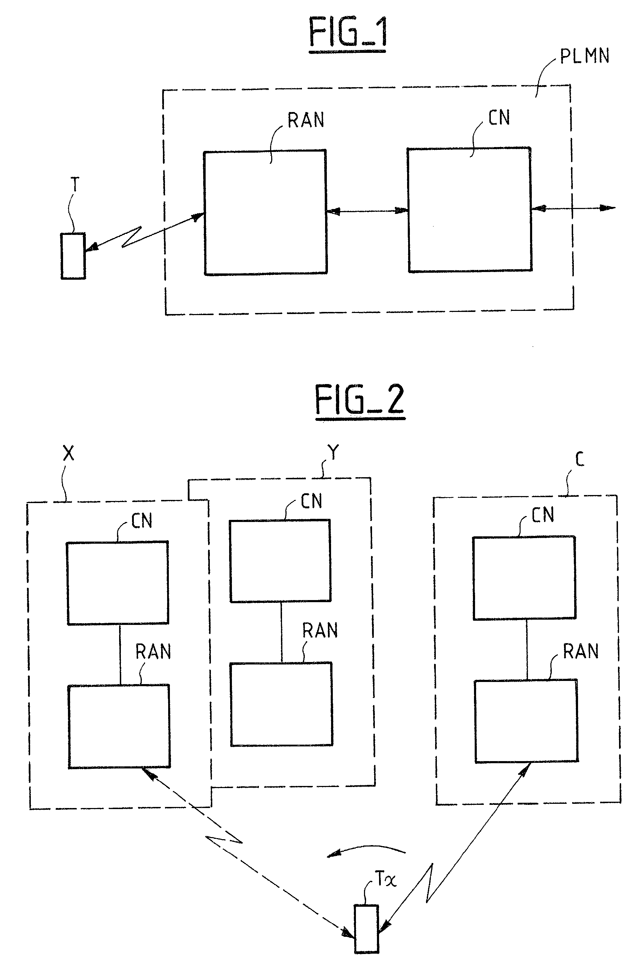

L'architecture générale de ces systèmes est rappelée sur la figure 1. Un réseau de radiocommunications mobiles, ou PLMN (pour « Public Land Mobile Network ») est en relation d'une part avec des terminaux mobiles, notés ici de manière générale T, et d'autre part avec des réseaux extérieurs, non illustrés spécifiquement sur cette figure. Les terminaux mobiles sont aussi appelés MS (pour « Mobile Station ») dans un système tel que le GSM par exemple, ou encore UE (pour « User Equipment») dans un système tel que l'UMTS par exemple. Un PLMN comporte essentiellement :
- un réseau d'accès radio ou RAN (pour « Radio Access Network »), chargé essentiellement de la transmission sur l'interface radio entre réseau et terminaux mobiles, et de la gestion des ressources de transmission sur cette interface radio,
- un coeur de réseau ou CN (pour « Core Network ») chargé essentiellement de l'acheminement et de la gestion des communications de ou vers les terminaux mobiles.

D'une manière générale, ces systèmes ont une architecture cellulaire, et des mécanismes sont prévus pour choisir en permanence une meilleure cellule serveuse, tels que notamment les mécanismes de sélection ou de re-sélection de cellule, ou les mécanismes de transfert intercellulaire (ou « handover »).

Par ailleurs, pour étendre la couverture géographique de ces systèmes et/ou les services proposés, il est généralement prévu une pluralité de réseaux ou PLMNs, généralement associés à différents opérateurs. Des mécanismes sont également prévus pour choisir en permanence un meilleur réseau serveur, si des accords d'itinérance (ou « roaming agreements ») sont prévus entre les opérateurs concernés. On utilise alors habituellement le terme de réseau nominal ou HPLMN (pour « Home PLMN ») pour désigner le réseau avec lequel un utilisateur est en relation d'abonnement, et réseau visité ou VPLMN (pour « Visited PLMN ») pour désigner un réseau différent du HPLMN, sous la couverture duquel se trouve cet utilisateur et avec lequel le HPLMN de cet utilisateur a des accords d'itinérance.

Un terminal mobile écoute en permanence les canaux balise associés à des cellules environnantes, et effectue des mesures radio sur ces canaux balise. A sa mise sous tension, un terminal peut ainsi écouter tout ou partie des canaux balise possibles; sinon la recherche est limitée aux canaux balise des cellules voisines de sa cellule serveuse actuelle. Sur la base de ces mesures le choix d'une meilleure cellule et/ou d'un meilleur réseau serveur peut être effectué soit par le terminal lui-même, soit par le réseau d'accès radio auquel ces mesures sont alors reportées par le terminal, selon les mécanismes considérés pour le choix d'une meilleure cellule serveuse et/ou d'un meilleur réseau serveur.

Une liste de cellules voisines sur lesquelles des mesures sont à effectuer est habituellement transmise aux terminaux par le réseau d'accès radio. L'ensemble de ces listes définit des relations de voisinage entre cellules, qui sont fonction de la configuration du système, le réseau d'accès radio étant pour cette raison généralement commandé par des moyens d'opération et de maintenance du réseau, ou O&M (ou « Operation & Maintenance »).

En outre, les cellules d'un réseau donné sont généralement regroupées en sous-ensembles généralement appelés zones de localisation (ou LA, pour « Location Area » dans le cas du GSM par exemple), dans un but de gestion de mobilité des utilisateurs et de vérification des droits d'accès. Un terminal mobile est capable de reconnaître, d'après les informations diffusées sur les canaux balise, si une nouvelle cellule re-sélectionnée appartient à la même zone de localisation que la cellule serveuse actuelle. Si oui, cette nouvelle cellule devient la nouvelle cellule serveuse. Sinon, le terminal en avise préalablement le réseau, par l'intermédiaire d'une procédure dite de mise à jour de localisation, afin de faire vérifier le droit de l'utilisateur à accéder à la nouvelle cellule. Dans le cas de réponse positive du réseau, l'utilisateur est alors enregistré dans la nouvelle zone de localisation, et cette nouvelle cellule devient la nouvelle cellule serveuse. De même une procédure d'enregistrement est prévue lors de la sélection initiale d'une cellule serveuse, à la mise sous tension du terminal.

Les données nécessaires à la vérification des droits d'accès, à savoir essentiellement le type d'abonnement de l'utilisateur et les accords d'itinérance entre opérateurs, ne sont généralement pas disponibles dans le réseau d'accès radio ou dans le terminal, mais sont généralement centralisées dans une base de données par exemple du type HLR/VLR (pour « Home Location register/Visitor Location Register ») prévue dans le coeur de réseau, car la gestion et la mise à jour de ces données en sont alors facilitées.

Le type d'abonnement de l'utilisateur peut être tel que les droits d'accès sont limités à une partie seulement du réseau nominal ; on parle aussi dans ce cas d'abonnement régional. Les accords d'itinérance peuvent en outre être tels que les droits d'accès sont limités à une partie seulement d'un réseau visité ; on parle aussi dans ce cas d'itinérance régionale.

Comme rappelé précédemment, différents réseaux ou PLMNs sont habituellement associés à différents opérateurs. Cependant, un partage de réseau entre plusieurs opérateurs peut être plus économique dans certains cas, par exemple dans des zones géographiques à faible densité de trafic, ou encore en phase initiale de déploiement d'une infrastructure de nouvelle génération.

Pour simplifier, considérons, en référence à la figure 2, un réseau « C » partagé entre deux opérateurs « X » et « Y » couvrant une certaine zone géographique , chacun de ces opérateurs couvrant par ailleurs d'autres zones géographiques au moyen de son propre réseau, noté également, respectivement, « X » et « Y ». Dans ce qui suit, le réseau « C » est aussi appelé réseau commun, et les réseaux « X » et « Y » sont aussi appelés réseaux distincts.

Chacun des opérateurs « X » et « Y » a des abonnés, notés respectivement « x » et « y ». Le réseau commun n'a pas d'abonnés, il est seulement visité par des abonnés itinérants « x » et « y » pour lesquels il fournit une couverture radio. Le réseau commun a cependant sa propre identité de PLMN.

Dans le cas d'un transfert inter-cellulaire du réseau « X » ou du réseau « Y » vers le réseau « C », la mise en oeuvre des mécanismes de transfert intercellulaire rappelés précédemment ne pose pas de problème. En revanche, dans le cas d'un transfert inter-cellulaire du réseau « C » vers le réseau « X » ou vers le réseau « Y », un problème se pose, qui est de permettre aux abonnés « x » de retourner vers le réseau « X » ou aux abonnés « y » de retourner vers le réseau « Y », et non l'inverse (par exemple, comme illustré sur la figure 2, à un terminal Tx d'un abonné « x » de retourner vers le réseau « X »).

Une première solution serait que le réseau d'accès radio du réseau commun ait connaissance des données nécessaires à la vérification des droits d'accès, lui permettant de sélectionner un PLMN approprié. Une telle solution repose sur l'exploitation de l'IMSI par le RAN, où IMSI (pour « International Mobile Subscriber Identity ») désigne un numéro d'abonné mobile, ce numéro contenant en effet l'identité du PLMN nominal (ou HPLMN), et permettant donc de savoir si l'utilisateur est un abonné « x » ou un abonné « y ».

Cette première solution a cependant des inconvénients, notamment:
- elle n'est pas applicable à des systèmes tels que notamment des systèmes de deuxième génération de type GSM, dans lesquels le réseau d'accès radio n'a pas connaissance de données telles que le numéro d'abonné mobile, ou IMSI,
- même dans des systèmes dans lequels elle est applicable, elle est difficile à mettre en oeuvre, car la prise en compte de toutes les données nécessaires telles que notamment les accords d'itinérance, et la mise à jour de ces données pour tenir compte des reconfigurations possibles du système, est assez complexe et difficile à mettre en oeuvre au niveau du réseau d'accès radio.

Une deuxième solution serait que le réseau d'accès radio du réseau commun adresse au coeur de réseau du réseau commun une requête de transfert inter-PLMN, lorsqu'il détecte qu'une cellule cible pour un tel transfert appartient à un autre PLMN que la cellule serveuse courante (la partie coeur de réseau ayant en effet, contrairement au réseau d'accès radio, la connaissance des données nécessaires à la vérification des droits d'accès).

Cette deuxième solution a cependant des inconvénients. Notamment, le coeur de réseau peut seulement rejeter des requêtes inappropriées reçues du réseau d'accès radio, alors qu'il serait en l'occurrence nécessaire d'avoir une méthode permettant de générer la requête appropriée. Ceci a notamment pour conséquence que plusieurs requêtes inappropriées successives peuvent être générées, d'où un retard dans l'exécution du transfert inter-cellulaire, et donc une dégradation de la qualité de service telle que perçue par les utilisateurs, voire une perte d'appel.

Un besoin existe donc pour une solution permettant d'éviter de tels inconvénients, ou plus généralement pour une solution permettant d'optimiser les procédures pour le choix de cellule serveuse et/ou de réseau serveur dans un tel système.

Un des objets de la présente invention est un système cellulaire de radiocommunications mobiles, comportant plusieurs réseaux dits réseaux distincts et un réseau dit réseau commun tel que dans au moins une partie des zones géographiques qu'il couvre, dite région multi-groupe, différents groupes d'au moins une cellule coexistent, chacun de ces groupes de cellules étant associé à un des réseaux distincts et fournissant une extension de la couverture radio de ce réseau distinct.

Suivant une autre caractéristique, les relations de voisinage entre cellules dans ce système sont telles que:
- dans la région multi-groupe, une cellule d'un groupe donné n'a pas de cellule voisine d'un autre groupe de cette région.

Suivant une autre caractéristique, les relations de voisinage entre cellules dans ce système sont telles que:
- dans la région multi-groupe, une cellule d'un groupe donné peut avoir au moins une cellule voisine dans ce groupe .

Suivant une autre caractéristique, les relations de voisinage entre cellules dans ce système sont telles que:
- dans la région multi-groupe, une cellule d'un groupe donné peut avoir au moins une cellule voisine dans le réseau distinct associé à ce groupe.

Suivant une autre caractéristique, les relations de voisinage entre cellules dans ce système sont telles que:
- dans la région multi-groupe, une cellule d'un groupe donné peut avoir au moins une cellule voisine dans une zone géographique couverte par le réseau commun autre que la région multi-groupe.

Suivant une autre caractéristique, le réseau commun comporte des moyens pour permettre un changement de cellule serveuse et/ou de réseau serveur, à partir d'une cellule serveuse actuelle dans le réseau commun, sur la base desdites relations de voisinage.

Suivant une autre caractéristique, lesdits moyens comportent des moyens pour transmettre à des terminaux mobiles, dans une cellule du réseau commun, une liste de cellules voisines établie selon lesdites relations de voisinage.

Suivant une autre caractéristique, lesdits moyens sont prévus dans le réseau d'accès radio du réseau commun.

Suivant une autre caractéristique, les relations de voisinage entre cellules dans ce système sont telles que :
- une cellule d'un réseau distinct n'a pas de cellule voisine dans un groupe de la région multi-groupe non associé à ce réseau.

Suivant une autre caractéristique, les relations de voisinage entre cellules dans ce système sont telles que :
- une cellule d'un réseau distinct peut avoir au moins une cellule voisine dans ce réseau.

Suivant une autre caractéristique, les relations de voisinage entre cellules dans ce système sont telles que :
- une cellule d'un réseau distinct peut avoir au moins une cellule voisine dans le groupe de la région multi-groupe associé à ce réseau.

Suivant une autre caractéristique, un réseau distinct comporte des moyens pour permettre un changement de cellule serveuse et/ou de réseau serveur, à partir d'une cellule serveuse actuelle dans un réseau distinct, sur la base desdites relations de voisinage.

Suivant une autre caractéristique, lesdits moyens comportent des moyens pour transmettre à des terminaux mobiles, dans une cellule d'un réseau distinct, une liste de cellules voisines établie selon lesdites relations de voisinage.

Suivant une autre caractéristique, lesdits moyens sont prévus dans le réseau d'accès radio desdits réseaux distincts.

Suivant une autre caractéristique, la répartition des cellules en zones de localisation dans le réseau commun est telle qu'une zone de localisation ne peut pas inclure de cellules de différents groupes.

Suivant une autre caractéristique, le réseau commun comporte des moyens pour permettre une vérification des droits d'accès, sur la base de ladite répartition de cellules en zones de localisation dans le réseau commun.

Suivant une autre caractéristique, lesdits moyens sont prévus dans le coeur de réseau du réseau commun.

Un autre objet de la présente invention est un équipement de réseau de radiocommunications mobiles, comportant des moyens adaptés pour être utilisés dans un système selon l'invention.

D'autres objets et caractéristiques de la présente invention apparaîtront à la lecture de la description suivante d'un exemple de réalisation, faite en relation avec les dessins ci-annexés dans lesquels:
- la figure 1 rappelle l'architecture générale d'un système de radiocommunications mobiles,
- la figure 2 est destinée à illustrer un exemple de système comportant un réseau commun et des réseaux distincts,
- la figure 3 est destinée à illustrer un exemple de système suivant l'invention.

Dans ce qui suit, on considèrera pour simplifier, à titre d'exemple, le cas décrit précédemment en relation avec la figure 2. Dans cet exemple, il y a deux groupes de cellules dans le réseau commun, celui-ci étant constitué d'une unique région multi-groupe. On suppose que les ressources radio allouées à chacun de ces groupes sont telles que au moins les canaux balise associés à des cellules de groupes différents permettent de distinguer ces différents groupes. Dans ce qui suit on appellera groupe « A », respectivement groupe « B » le groupe de cellules associé à l'opérateur « X » ou au réseau « X », respectivement à l'opérateur « Y » ou au réseau « Y ».

Dans l'exemple de réalisation considéré, les relations de voisinage entre cellules sont telles que:
- des cellules du groupe « A» (respectivement « B ») n'ont pas de cellule voisine du groupe « B » (respectivement « A »),
- des cellules d'un groupe peuvent avoir des cellules voisines dans ce groupe et dans le réseau associé à ce groupe ; ainsi les cellules du groupe « A » (respectivement « B ») peuvent avoir des cellules voisines dans le groupe « A » (respectivement « B ») et dans le réseau « X » (respectivement « Y »).

Ainsi, les abonnés « x » (respectivement « y ») se trouvant dans une cellule du groupe « A » (respectivement « B »), dans le cas d'un transfert inter-cellulaire du réseau « C » vers le réseau « X » ou « Y » les abonnés « x » retournent vers le réseau « X » et les abonnés « y » retournent vers le réseau « Y », sans qu'une vérification des droits d'accès soit nécessaire dans le RAN, simplement sur la base des relations de voisinage selon lesquelles le réseau commun a ainsi été configuré. En d'autres termes, le problème présenté précédemment est ainsi résolu sans présenter les inconvénients des solutions alternatives mentionnées précédemment.

En d'autres termes, ou plus généralement, un système suivant l'invention comporte plusieurs réseaux dits réseaux distincts et un réseau dit réseau commun tel que dans au moins une partie des zones géographiques qu'il couvre (dite région multi-groupe), différents groupes d'au moins une cellule coexistent, chacun de ces groupes de cellules étant associé à un des réseaux distincts et fournissant une extension de la couverture radio de ce réseau distinct.

Notamment, les relations de voisinage entre cellules dans ce système peuvent être telles que une ou plusieurs des propriétés suivantes sont vérifiées:
- dans la région multi-groupe, une cellule d'un groupe donné n'a pas de cellule voisine d'un autre groupe de cette région,
- dans la région multi-groupe, une cellule d'un groupe donné peut avoir au moins une cellule voisine dans ce groupe,
- dans la région multi-groupe, une cellule d'un groupe donné peut avoir au moins une cellule voisine dans le réseau distinct associé à ce groupe,
- dans la région multi-groupe, une cellule d'un groupe donné peut avoir au moins une cellule voisine dans une zone géographique couverte par le réseau commun autre que la région multi-groupe.

Encore en d'autres termes, le réseau commun comporte des moyens pour permettre un changement de cellule serveuse et/ou de réseau serveur, à partir d'une cellule serveuse actuelle dans le réseau commun, sur la base desdites relations de voisinage entre cellules.

Notamment, lesdits moyens peuvent eux-mêmes comporter des moyens pour transmettre à des terminaux mobiles, dans une cellule du réseau commun, une liste de cellules voisines établie selon lesdites relations de voisinage.

Avantageusement, lesdits moyens sont prévus dans le réseau d'accès radio du réseau commun.

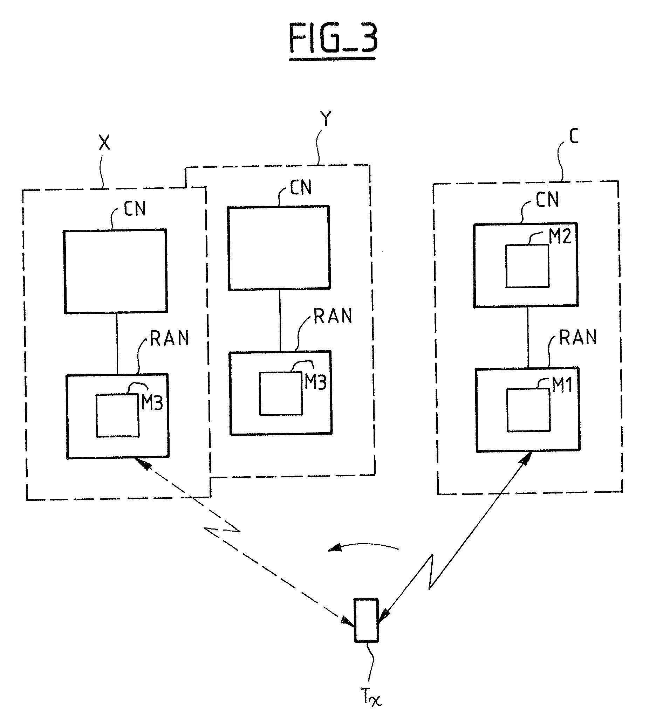

Sur la figure 3 (correspondant à titre d'exemple à un contexte analogue à celui de la figure 2) lesdits moyens, notés M1, sont ainsi prévus dans le réseau d'accès radio, ou « RAN », du réseau commun « C ».

En outre, dans l'exemple de réalisation considéré, la répartition des cellules en zones de localisation dans le réseau commun est telle que les cellules des groupes « A » et « B » forment des zones de localisation séparées, ou en d'autres termes une zone de localisation ne peut pas inclure des cellules de différents groupes.

En d'autres termes, la notion d'itinérance régionale s'applique dans le réseau commun, un utilisateur pouvant en effet être autorisé à n'accéder qu'à une partie seulement de ce réseau, non pas sur la base de son abonnement, mais sur la base d'accords passés par l'opérateur avec lequel il est en relation d'abonnement.

Ainsi, à la mise sous tension du terminal d'un abonné « x » ou « y » dans le réseau commun, le terminal peut sélectionner n'importe quelle cellule, suivant les conditions radio. Une fois qu'une cellule a été sélectionnée, une tentative d'enregistrement est effectuée dans la zone de localisation correspondante. L'accès à cette zone de localisation peut être autorisé ou refusé par le réseau sur la base des accords d'itinérance. S'il est refusé, une autre tentative d'enregistrement est effectuée dans une autre zone de localisation, jusqu'à ce que le réseau autorise l'accès. De cette façon, l'abonné est envoyé vers celui des groupes de cellules du réseau commun qui est associé à son PLMN nominal.

A partir de cet état, l'abonné restera dans ce groupe, à cause des relations de voisinage entre cellules selon lesquelles le réseau commun a été configuré, comme indiqué plus haut (que ce soit un transfert inter-cellulaire ou une re-sélection de cellule).

En d'autres termes, ou plus généralement, la répartition des cellules en zones de localisation dans le réseau commun est telle qu'une zone de localisation ne peut pas inclure de cellules de différents groupes.

Encore en d'autres termes, le réseau commun comporte des moyens pour permettre une vérification des droits d'accès, sur la base de ladite répartition de cellules en zones de localisation dans le réseau commun.

Avantageusement, lesdits moyens sont prévus dans le coeur de réseau du réseau commun.

Sur la figure 3 (correspondant à titre d'exemple à un contexte analogue à celui de la figure 2) lesdits moyens, notés M2, sont ainsi prévus dans le coeur de réseau, ou « CN», du réseau commun « C ».

En outre, dans l'exemple de réalisation considéré, les relations de voisinage entre cellules sont également telles que:
- des cellules du réseau « X » (respectivement « Y ») n'ont pas de cellules voisines dans le groupe « B » (respectivement « A »),
- des cellules d'un réseau donné peuvent avoir des cellules dans ce réseau et dans le groupe de cellules associé dans le réseau commun ; ainsi des cellules du réseau « X » (respectivement « Y ») peuvent avoir des cellules voisines dans le réseau « X » (respectivement « Y ») et dans le groupe « A » (respectivement « B »).

Ainsi, si l'utilisateur met son terminal sous tension dans son PLMN nominal, les relations de voisinage selon lesquelles les réseaux distincts ont été configurés garantissent qu'il est envoyé vers le groupe de cellules approprié du réseau commun.

En d'autres termes, ou plus généralement, les relations de voisinage entre cellules dans ce système peuvent être telles que une ou plusieurs des propriétés suivantes sont vérifiées:
- une cellule d'un réseau distinct n'a pas de cellule voisine dans un groupe de la région multi-groupe non associé à ce réseau,
- une cellule d'un réseau distinct peut avoir au moins une cellule voisine dans ce réseau,
- une cellule d'un réseau distinct peut avoir au moins une cellule voisine dans le groupe de la région multi-groupe associé à ce réseau.

Encore en d'autres termes, un réseau distinct comporte des moyens pour permettre un changement de cellule serveuse et/ou de réseau serveur, à partir d'une cellule serveuse actuelle dans un réseau distinct, sur la base desdites relations de voisinage.

Notamment, lesdits moyens peuvent eux-mêmes comporter des moyens pour transmettre à des terminaux mobiles, dans une cellule d'un réseau distinct, une liste de cellules voisines établie selon lesdites relations de voisinage.

Avantageusement, lesdits moyens sont prévus dans le réseau d'accès radio desdits réseaux distincts.

Sur la figure 3 (correspondant à titre d'exemple à un contexte analogue à celui de la figure 2) lesdits moyens, notés M3, sont ainsi prévus dans le réseau d'accès radio, ou « RAN », des réseaux distincts « X » et « Y ».

La réalisation particulière des moyens tels que M1, M2, M3 ne présentant pas de difficulté particulière pour l'homme du métier, de tels moyens ne nécessitent pas d'être décrits ici de manière plus détaillée que ce qui a été fait précédemment, par leur fonction.

Les principes décrits ci-dessus peuvent être généralisés à plus de deux groupes de cellules ou opérateurs.

En outre, la présente invention est applicable quelle que soit la façon dont le réseau commun est opéré, qu'il soit opéré en commun par différents opérateurs tels que « X » ou « Y », ou qu'il soit opéré par un même opérateur distinct des opérateurs tels que « X » ou « Y ».

En outre, la présente invention est également applicable aux cas suivants (pour simplifier exposés en relation avec l'exemple décrit précédemment) :
- si l'opérateur « X » a des accords d'itinérance avec un opérateur « Z », alors , dans le cas de transfert inter-cellulaire du réseau « C » vers le réseau « X » ou « Y », les abonnés « z » du réseau « Z » sont transférés vers le réseau « X »,
- si un opérateur « W » a des accords d'itinérance à la fois avec « X » et « Y », alors les abonnés « w » de l'opérateur « W » peuvent dans le cas de transfert inter-cellulaire du réseau « C » vers le réseau « X » ou « Y », être transférés vers le réseau « X » ou vers le réseau « Y ».

## Revendications

1. Système cellulaire de radiocommunications mobiles, comportant plusieurs réseaux dits réseaux distincts (X, Y) et un réseau dit réseau commun tel que dans au moins une partie des zones géographiques qu'il couvre, dite région multi-groupe, différents groupes d'au moins une cellule coexistent, chacun de ces groupes de cellules étant associé à un des réseaux distincts et fournissant une extension de la couverture radio de ce réseau distinct.

2. Système selon la revendication 1, dans lequel les relations de voisinage entre cellules dans ce système sont telles que:
- dans la région multi-groupe, une cellule d'un groupe donné n'a pas de cellule voisine d'un autre groupe de cette région.

3. Système selon l'une des revendications 1 ou 2, dans lequel les relations de voisinage entre cellules dans ce système sont telles que:
- dans la région multi-groupe, une cellule d'un groupe donné peut avoir au moins une cellule voisine dans ce groupe .

4. Système selon l'une des revendications 1 à 3, dans lequel les relations de voisinage entre cellules dans ce système sont telles que:
- dans la région multi-groupe, une cellule d'un groupe donné peut avoir au moins une cellule voisine dans le réseau distinct associé à ce groupe.

5. Système selon l'une des revendications 1 à 4, dans lequel les relations de voisinage entre cellules dans ce système sont telles que:
- dans la région multi-groupe, une cellule d'un groupe donné peut avoir au moins une cellule voisine dans une zone géographique couverte par le réseau commun autre que la région multi-groupe.

6. Système selon l'une des revendications 2 à 5, dans lequel le réseau commun comporte des moyens (M1) pour permettre un changement de cellule serveuse et/ou de réseau serveur, à partir d'une cellule serveuse actuelle dans le réseau commun, sur la base desdites relations de voisinage entre cellules.

7. Système selon la revendication 6, dans lequel lesdits moyens comportent des moyens pour transmettre à des terminaux mobiles, dans une cellule du réseau commun, une liste de cellules voisines établie selon lesdites relations de voisinage.

8. Système selon l'une des revendications 6 ou 7, dans lequel lesdits moyens sont prévus dans le réseau d'accès radio (RAN) du réseau commun.

9. Système selon l'une des revendications 1 à 8, dans lequel les relations de voisinage entre cellules dans ce système sont telles que :
- une cellule d'un réseau distinct n'a pas de cellule voisine dans un groupe de la région multi-groupe non associé à ce réseau.

10. Système selon l'une des revendications 1 à 9, dans lequel les relations de voisinage entre cellules dans ce système sont telles que :
- une cellule d'un réseau distinct peut avoir au moins une cellule voisine dans ce réseau.

11. Système selon l'une des revendications 1 à 10, dans lequel les relations de voisinage entre cellules dans ce système sont telles que :
- une cellule d'un réseau distinct peut avoir au moins une cellule voisine dans le groupe de la région multi-groupe associé à ce réseau.

12. Système selon l'une des revendications 9 à 11, dans lequel un réseau distinct comporte des moyens (M3) pour permettre un changement de cellule serveuse, à partir d'une cellule serveuse actuelle dans un réseau distinct, sur la base desdites relations de voisinage.

13. Système selon la revendication 12, dans lequel lesdits moyens comportent des moyens pour transmettre à des terminaux mobiles, dans une cellule d'un réseau distinct, une liste de cellules voisines établie selon lesdites relations de voisinage.

14. Système selon l'une des revendications 12 ou 13, dans lequel lesdits moyens sont prévus dans le réseau d'accès radio (RAN) desdits réseaux distincts.

15. Système selon l'une des revendications 1 à 14, dans lequel la répartition des cellules en zones de localisation dans le réseau commun est telle qu'une zone de localisation ne peut pas inclure de cellules de différents groupes.

16. Système selon la revendication 15, dans lequel le réseau commun comporte des moyens (M2) pour permettre une vérification des droits d'accès, sur la base de ladite répartition de cellules en zones de localisation dans le réseau commun.

17. Système selon la revendication 16, dans lequel lesdits moyens sont prévus dans le coeur de réseau (CN) du réseau commun.

18. Equipement de réseau de radiocommunications mobiles, comportant des moyens adaptés pour être utilisés dans un système selon l'une des revendications 1 à 17.
